# EUROPÄISCHE PATENTANMELDUNG

(11) **EP 4 140 661 A1**
(43) Veröffentlichungstag der Anmeldung: **01.03.2023**
(21) Anmeldenummer: 21192807.2
(22) Anmeldetag: 24.08.2021
(51) Int. Cl.: B25J 5/00, B25J 11/00, G05D 1/02

(54) **AUTONOMER MOBILER LABORASSISTENZROBOTER FÜR EIN IN VITRO DIAGNOSTISCHES LABOR**

(71) Anmelder: Siemens Healthcare GmbH, 91052 Erlangen (DE)
(72) Erfinder: DENCOVSKI, Kristian, 91052 Erlangen (DE); HOFMANN, Jörg, 91301 Forchheim (DE); SCHERLIPP, Robert, 90403 Nürnberg (DE); DIRAUF, Franz, 96231 Bad Staffelstein (DE); FRIEDRICH, Stefan, 95445 Bayreuth (DE); NEUBER, Wolfgang, 92690 Pressath (DE); SCHWINGENSCHLÖGL, Patrik, 91052 Erlangen (DE)

(57) **Zusammenfassung**

In einem Aspekt betrifft die Erfindung einen mobilen autonomen kollaborativen Assistenzroboter (100) zum Bewegen und/oder Manipulieren von Objekten, insbesondere Proben, insbesondere flüssigen Proben und/oder Reagenzien und/oder Geräten, in einem medizinischen Betriebsbereich, insbesondere in einem invitro-diagnostischen Labor zur Analyse der Proben, umfassend:
- Eine Navigationseinheit (101) zur autonomen oder teilautonomen kollisionsfreien Navigation in dem Betriebsbereich;
- Eine lokalen Prozessoreinheit (102) zur Daten- und Signalverarbeitung;
- Eine Kommunikationseinheit (103) zur Interkation mit externen Geräten über drahtlose Schnittstellen;
- Ein autonomes Antriebssystem (104), insbesondere einem elektrischen Antriebssystem;
- Eine Energieversorgungseinrichtung (105);
- Einen Korpus (106), an dem eine drehbar gelagerte lineare Hubachse (H) befestigt ist, wobei an einem Schlitten (S) der Hubachse (H) zumindest ein Greifarm (G) starr befestigt ist, so dass der Greifarm (G) einen zylindrischen Arbeitsbereich bedienen kann;
- Eine Sensoreinheit (107), insbesondere umfassend eine Menge von optischen Sensoren zur Umgebungserkennung und
- Eine Identifikationsrichtung (108), die zur eineindeutigen Identifikation der zu bewegenden Objekte und insbesondere zur Identifikation des Inhalts dieser Objekte bestimmt ist.

## Beschreibung

Die vorliegende Erfindung liegt auf dem Gebiet der In-vitro-Diagnostik in Verbindung mit dem Gebiet der Robotik und betrifft insbesondere einen mobilen autonomen kollaborativen Assistenzroboter, ein System mit mehreren solchen Assistenzrobotern und ein Verfahren zum automatisierten Bewegen und/oder Manipulieren von Objekten, wie flüssigen (Patienten-) Proben, Reagenzien und weiteren Verbrauchsmaterialien.

Die beteiligten Systeme sollen oder werden oftmals in einem 24h/ 7 Tage Betrieb betrieben. Entsprechend muss das Personal (Medical Laboratory Assistants) eingeplant und eingesetzt werden. Anspruchsvolle Schichtpläne, große Aufwände beim Training der Fachkräfte und ein stetig ansteigender Fachkräftemangel bedeuten für Betreiber von IVD-Test-Laboren große Herausforderungen. Die Covid-19 Pandemie hat hierbei den Druck zusätzlich erhöht.

Die Proben, die in einem IVD Labor analysiert werden unterliegen hohen Verarbeitungsanforderungen. So müssen die Proben häufig innerhalb vorgegebener Zeitspannen und/oder unter spezifischen physikalischen Bedingungen (z.B. gekühlt) verarbeitet und mit Reagenzien in Kontakt gebracht werden. Auch sind die Wege, die zum Transport der Proben und Reagenzien bereitstehen, häufig räumlich begrenzt und es müssen komplizierte Bewegungsabläufe zum Transport dieser Proben und/oder Reagenzien ausgeführt werden (z.B. das Öffnen/Schließen eines Kühlschranks und das Befüllen und/oder Entnehmen von Proben und Reagenzien aus hohen und tiefen Regalsystemen). Auch weitere Verbrauchsmaterialien (z.B. Küvetten, Probenspitzen, Reinigungsflüssigkeiten) müssen transportiert werden und in Geräte beladen bzw. entnommen werden. Die Proben können infektiös sein, so dass besondere Sicherheitsvorkehrungen beim Transport und bei Ablage dieser Proben eingehalten werden müssen, die etwa ein "Überschwappen" von Probeninhalt sicher vermeiden.

Die vorliegende Erfindung hat sich zur Aufgabe gestellt, die vorstehend genannten Abläufe zu automatisieren und die Nachteile im Stand der Technik zumindest teilweise zu überwinden. Insbesondere sollen mobile Roboter derart angepasst werden, dass sie für den spezifischen Anwendungsfall in einem IVD-Labor einsetzbar sind.

Diese Aufgabe wird durch die beiliegenden unabhängigen Ansprüche gelöst, insbesondere durch einen mobilen autonomen kollaborativen Assistenzroboter, ein System mit mehreren solchen Assistenzrobotern und ein Verfahren zum automatisierten Bewegen und/oder Manipulieren von Objekten, insbesondere (flüssigen) Patientenproben und Reagenzien.

In einem Aspekt betrifft die Erfindung einen mobilen autonomen kollaborativen Assistenzroboter zum Bewegen (insbes. Transportieren) und/oder Manipulieren (z.B. Öffnen/Schließen/Ablegen/Einsetzen) von Objekten, insbesondere Proben und/oder Reagenzien, insbesondere flüssigen Proben, wie z.B. Blut oder Urin, die in einem in-vitro-diagnostischen Labor ggf. unter Verwendung von Reagenzien analysiert werden. Dazu kann es notwendig sein, dass der Assistenzroboter auch Geräte manipuliert (z.B. Kühlschränke öffnet/schließt oder Analysegeräte öffnet und schließt, um Verbrauchsmaterial zu ersetzen oder Abfälle zu entnehmen), um die Proben und/oder Reagenzien zu entnehmen und/oder zu lagern. Der Assistenzroboter umfasst:
- Eine Navigationseinheit zur autonomen oder teil-autonomen kollisionsfreien Navigation in einem Betriebsbereich des Assistenzroboters;
- Eine lokale Prozessoreinheit zur Daten- und Signalverarbeitung;
- Eine Kommunikationseinheit zur Interkation mit externen Geräten über drahtlose Schnittstellen;
- Ein autonomes Antriebssystem, insbesondere einem elektrischen Antriebssystem, z.B. mit Omniwheels;
- Eine Energieversorgungseinrichtung;
- Einen Korpus, an dem eine drehbar gelagerte lineare Hubachse befestigt ist, wobei an einem Schlitten der Hubachse zumindest ein Greifarm starr befestigt ist, so dass der Greifarm einen zylindrischen Arbeitsbereich bedienen kann;
- Eine Sensoreinheit, insbesondere umfassend eine Menge von optischen Sensoren zur Umgebungserkennung und
- Eine Identifikationsrichtung, die zur eineindeutigen Identifikation der zu bewegenden Objekte und insbesondere zur Identifikation und/oder zur visuellen Inspektion des Inhalts dieser Objekte bestimmt ist.

In einer bevorzugten Ausführungsform der Erfindung kann die Identifikationsrichtung z.B. zum elektronischen Erfassen (Lesen) eines digitalen Codes (z.B. Barcodes) ausgebildet sein. Kumulativ oder alternativ kann die Identifikationsrichtung die visuelle Inspektionseinrichtung noch weitere technische Bauteile, wie beispielsweise einen Beleuchtungsmechanismus und eine Kamera umfassen, um zusätzliche Funktionalität zur Verfügung zu stellen.

Mit einem solchen Laborassistenzroboter (im Folgenden auch kurz Roboter genannt) kann der Ablauf zur Analyse von Proben wesentlich vereinfacht und effizienter und weniger fehleranfällig gemacht werden. Die Verwendung von aus dem Stand der Technik bekannten mobilen Robotern ist allerdings nicht möglich, da diese nicht den spezifischen IVD-Bedingungen genügen (insbesondere hinsichtlich Safety-Anforderungen, Platzverbrauch, Erreichbarkeit von Positionen in hinteren niedrigen oder hohen Regalbereichen ohne Beschädigung der davor positionierten Proben, Transport von flüssigen Proben ohne die Gefahr des Verschüttens und/oder Transport von Reagenzien mit bestimmten Temperatur/Feuchtigkeitsanforderungen etc.), sowie Vorbereitung von Reagenzien (insbesondere durch visuelle Inspektion).

Unter dem Begriff "Betriebsbereich" ist ein definierter lokalisierter Arbeitsbereich des Assistenzroboters innerhalb des IVD Labors zu verstehen. Er kann durch die Angaben von Ortskoordinaten repräsentiert und gespeichert sein (XY-Koordinaten, wenn er in einer Ebene liegt oder optional kumulativ mit Z-Koordinaten, wenn mehrere Ebenen betroffen sind und der Betriebsbereich sich z.B. über mehrere Stockwerke erstreckt).

Die Energieversorgungseinrichtung kann z.B. als eine Ladestation ausgebildet sein, die der Roboter eigenständig aufsucht, um dort insbesondere per wireless charging aufgeladen zu werden. Die Positionierung bzw. Anordnung der Ladestation ist in einer vorgenannten Ausbildungsform der Erfindung mit der Position eines Lagersystems zur Lagerung von unterschiedlichen Endeffektoren zum Austauschen derselben kombiniert, sodass hier keine zusätzlichen Wege abgefahren werden müssen. Insbesondere könnte der Weg zur Ladestation mit dem Weg zum Adapter für den Austausch von Endeffektoren übereinstimmen, um Zeit und Energie zu sparen.

Der Korpus kann als mobile Plattform ausgebildet sein. Der Korpus kann beispielsweise eine im Wesentlichen quaderförmige oder zylindrische Form (Außenkontur) aufweisen.

Die Sensoreinheit kann eine Menge von gleichartigen oder unterschiedlichen Sensortypen umfassen, wie z.B. optische Sensoren, LIDAR-Sensoren, RADAR-Sensoren und/oder taktile Sensoren, wie z.B. Kraftsensoren oder Inertialsensoren in Verkleidungen oder exponierten Oberflächen.

Die Identifikationsreinrichtung dient mitunter zur Identifikation der bewegten und/oder manipulierten Objekte (insbesondere der transportierten Proben, Reagenzien und weiteren Verbrauchsmaterialien) und deren Inhalt. Die Identifikationsreinrichtung kann einen optischen Sensor umfassen und insbesondere als Scanner eines zweidimensionalen Codes, wie z.B. eines QR-Codes oder Barcodes ausgebildet sein. In einer einfachen Ausführungsform kann die Identifikationseinrichtung und die Sensoreinheit identisch sein oder in einem Bauteil integriert sein. In einer weiteren Ausführungsform der Erfindung handelt es sich um zwei separate Bauteile, die auch an unterschiedlichen Positionen des Roboters befestigt sein können. Die Identifikationsreinrichtung kann alternativ oder kumulativ auch zur Ausführung von berührungslosen Identifikationsverfahren, beispielsweise auf Basis von RFID, ausgebildet sein. In einer vorteilhaften Weiterbildung der Erfindung kann die Identifikationsreinrichtung weiterhin zur Identifikation von externen Geräten anhand äußerer Merkmale und Lokalisierung und Identifikation von Manipulationspunkten (z.B. Greifpunkten am Gerät) ausgebildet sein. Dies hat den technischen Effekt, dass die Identifikationseinrichtung bzw. die mit ihr gesammelten Signale auch zur spezifischen Ansteuerung des Roboters zum Öffnen/Schließen oder anderweitigem Bedienen von Türen und/oder Abdeckungen über Griffelemente verwendet werden kann.

In einer bevorzugten Ausführungsform der Erfindung kann der Roboter einen Ablagebereich umfassen, in dem zumindest ein zu transportierendes Objekt und insbesondere eine flüssige Probe und/oder Reagenzien abgelegt werden können. Der Ablagebereich kann dabei temperaturgeführt sein und insbesondere als Kühlbox oder Wärmebox ausgebildet sein. Der Ablagebereich kann regal- oder Gestell-artige Aufsätze umfassen, um eine Vielzahl von sogenannten Trays, Racks oder Packs oder Probehaltern platzsparend aufnehmen und transportieren zu können. In einer bevorzugten Ausführungsform der Erfindung wird die Temperatur der temperierten Proben kontinuierlich oder ereignisbasiert (z.B. bei Einsetzen oder Hinzufügen eines neuen Objektes) überwacht und/oder elektronisch protokolliert. Dies hat den technischen Vorteil, dass eine durchgängige Überwachung und Zeiteinsparung sowie eine Qualitätssicherung bereitgestellt werden kann.

In einer weiteren bevorzugten Ausführungsform der Erfindung kann der Roboter ein Schockabsorptionssystem umfassen. Dies hat den Vorteil, dass gefährliche Proben erschütterungsfrei bewegt werden können.

In einer weiteren bevorzugten Ausführungsform der Erfindung kann der zumindest eine Greifarm ein hinteres Armsegment umfassen, über das er an der Hubachse befestigt ist und ein mit dem hinteren Armsegment gelenkig verbundenes vorderes Armsegment umfassen, an dem ein Endeffektor und insbesondere ein Endeffektor mit drei Freiheitsgraden befestigt ist. "Hinteres Armsegment" meint hier das Armsegment das in Bezug zum Endeffektor hinten, also an der Hubachse angeordnet ist und "vorderes Armsegment" meint das Armsegment, das Endeffektor-nah und Hubachsen-fern angeordnet ist.

In einer bevorzugten Ausführungsform der Erfindung kann mehr als ein Greifarm vorgesehen sein. Es können beispielsweise für komplexere Aufgaben zwei (2) oder mehr Greifarme an einem Schlitten befestigt sein, die an unterschiedlichen Aufgaben parallel arbeiten oder, die koordiniert zusammenwirken, um gemeinsam eine Aufgabe zu lösen (z.B. Drehen von Verschlüssen oder Aufgaben, die nur 2-händig zu lösen sind). Es ist auch möglich, dass an dem Greifarm mehr als ein Endeffektor (z.B. eine Roboterhand) befestigt ist. Die zwei oder mehr Endeffektoren können ebenfalls an unterschiedlichen Aufgaben parallel arbeiten oder können koordiniert zusammenwirken, um gemeinsam eine Aufgabe zu lösen.

Der Endeffektor ist eine Vorrichtung, die an einem Hubachsenfernen Ende des Greifarmes befestigt ist. Der Endeffektor ist in mehreren, vorzugsweise in mindestens 3, unabhängigen Freiheitsgraden beweglich, so dass ein zylindrischer Arbeitsraum nicht nur in Zylinderkoordinaten angefahren, sondern in allen Raumachsen manipuliert werden kann. Das ist beispielsweise wichtig, um ein vertikal aufklappendes Fach aufzumachen oder, um von oben oder schräg seitlich herein in z.B. ein Regal greifen zu können.

Der Endeffektor kann in einem einfachen Fall als ein Greifer ausgebildet sein. Der Greifer kann an den oben erwähnten "Handgelenk"-artigen Mechanismus angeflanscht sein, so dass für alle Endeffektoren die Manipulierbarkeit in allen räumlichen Dimensionen gegeben ist. Kumulativ oder alternativ zu mechanisch form- oder kraftschlüssigen Greifern (z.B. Vakuumsauger), können magnetische, pneumatische, formadaptive (elastische) Greifer eingesetzt werden.

In einer weiteren bevorzugten Ausführungsform der Erfindung kann der Endeffektor über einen Adapter/Wechselsystem an dem vorderen Armsegment befestigt sein, der einen flexiblen Austausch von unterschiedlichen Endeffektoren (z.B. "Robotergreifern oder -händen") für unterschiedliche Aufgaben ermöglicht.

In einer weiteren bevorzugten Ausführungsform der Erfindung kann eine oder mehrere Schwenkachsen des zumindest einen Greifarms im Wesentlichen vertikal angeordnet sein, so dass der Greifarm und insbesondere dessen Armsegmente senkrecht zur Hubachse beweglich sind. Insbesondere sind die Armsegmente radial in einem Winkel von 360° um die Hubachse beweglich.

In einer weiteren bevorzugten Ausführungsform der Erfindung kann der zumindest eine Greifarm als Teleskoparm ausgebildet sein. Insbesondere kann der Teleskoparm als ein Teleskoparm mit Kraftmessung und/oder kraftsensitiven Bewegungen zur Durchführung von kollaborativen Tätigkeiten ausgebildet sein. Dies hat den technischen Effekt, dass der Greifarm mitunter mit anderen Endeffektoren, anderen Greifarmen, Bauteilen, Geräten und/oder mit dem Menschen kollaborieren kann.

In einer weiteren bevorzugten Ausführungsform der Erfindung kann ein Zusatzgelenk mit einer horizontalen Drehachse hinzugefügt werden. Das Zusatzgelenk kann an unterschiedlichen Positionen des Greifarms befestigt sein und insbesondere am Adapter und/oder Endeffektor. Das Zusatzgelenk kann eine Schwenkbewegung in vertikaler Richtung ausführen, um z.B. die Zugänglichkeit von schwierig erreichbaren Objekten zu verbessern (z.B. ganz hinten ganz oben oder unten in einem Regal).

In einer weiteren bevorzugten Ausführungsform der Erfindung kann der zumindest eine Greifarm mit Greifinstruktionen zum Greifen der Objekte und/oder mit Bedieninstruktionen zum Manipulieren, insbesondere zum Öffnen und/oder Verschließen von externen Geräten und/oder internen Bauteilen angesteuert werden. Die Identifikationseinrichtung und/oder Sensoreinheit erlaubt/erlauben insbesondere die Identifizierung und Lokalisierung von Manipulationspunkten zum Manipulieren (z.B. Öffnen und/oder Verschließen, Anheben etc.) von externen Geräten und/oder internen Bauteilen und entsprechend genauer Positionierung relativ zum externen Gerät (z.B. Schublade vom Analyzer mit entsprechenden Greifpunkt erkennen und bedienen).

In einer weiteren bevorzugten Ausführungsform der Erfindung kann der zumindest eine Greifarm in einer Transportposition positioniert sein, die nicht über eine Außenkontur des Assistenzroboters herausragt, wenn sich der Assistenzroboter bewegt. Alternativ oder kumulativ kann der zumindest eine Greifarm auf koordinierte Weise mit der Fahrbewegung des Assistenzroboters angesteuert werden, um eine Manipulationsaufgabe zu erfüllen. So kann der Greifarm bei Bewegung des Assistenzroboters unabhängig von der Fahrbewegung des Assistenzroboters Greifbewegungen und/oder Manipulationen von Objekten in einem Bereich durchführen, der nicht über die Außenkontur des Assistenzroboter-Korpus herausragt. Es kann jedoch auch Aufgaben geben, die ein Auskragen des Greifarms außerhalb der Außenkontur des Korpus des Assistenzroboters erfordern. Dies umfasst ein gleichzeitiges Bewegen von Greifarm und Fahrmodul bis hin zu koordinierten gemeinsamen Bewegungen z.B. zum Öffnen/Schließen von Kühlschranktüren.

In einer weiteren bevorzugten Ausführungsform der Erfindung kann die Sensoreinheit zumindest teilweise in einem festen Abstand an der Hubachse, insbesondere an dessen einem oberen Ende, befestigt sein. Alternativ kann die Sensoreinheit an einem Mechanismus befestigt sein, welcher eine räumliche Reorientierung der Sensoreinheit ermöglicht. Der Mechanismus kann z.B. als Schwenk-Neige Einheit (Pan-tilt unit) ausgebildete sein. Alternativ oder kumulativ kann die Sensoreinheit direkt auf dem Roboterarm (oder einem speziell dafür designten eigenen Roboterarm) angebracht werden. Die Sensoreinheit kann fest angebracht sein, zusammen mit der drehbaren Hubachse (so dass diese von der Drehachse mitgedreht wird), auf einer separaten Einheit (wie z.B. pan-tilt) oder insb. auch im vorderen Teil der horizontalen Achse (z.B. als integrierte Kamera), oder auch sogar auch im End-Effektor mit integriert sein.

In einer weiteren bevorzugten Ausführungsform der Erfindung kann die Sensoreinheit einen MEMS Baustein umfassen und/oder eine optische Sensoreinheit, eine Beschleunigungssensoreinheit, eine LIDAR-, Radar und/oder Sonar-Sensoreinheit, eine Gyroskopeinheit, eine Kraft- und/oder Momentensensoreinheit, eine akustische Sensoreinheit, eine Temperaturmesseinheit und/oder eine Sensoreinheit zur Erfassung von Umgebungsbedingungen, insbesondere von Feuchtigkeit und/oder Temperatur. Alternativ oder kumulativ können kapazitive Sensoren oder auch resistive Sensoren (z.B. für taktile Anwendung) eingesetzt werden. Die Bauteile der Sensoreinheit können an dem Korpus bzw. der mobilen Plattform, am Roboterarm oder an den weiteren Bauteilen des Roboters und/oder an Geräten im medizinischen Bereich (Analyzer, Kühlschrank) angeordnet sein.

In einer weiteren bevorzugten Ausführungsform der Erfindung kann der Roboter einen Zeitgeber umfassen, um alle ausgeführten Aktionen in einer digitalen Repräsentation mit einem Zeitstempel lokal und/oder in einem zentralen über eine Datenverbindung erreichbaren Speicher zu speichern.

In einer weiteren bevorzugten Ausführungsform der Erfindung kann die Navigationseinheit einen globalen und/oder lokalen Trajektorienplanungsalgorithmus implementieren. Die Navigationseinheit kann Pfade bzw. Trajektorien generieren, welche sowohl online (also während des Betriebs des Roboters) und adaptiv geplant werden, je nach Umgebung und Hindernissituation, oder aber auch fest vorgeplant sind und sich an fixen, festgelegten zulässigen Fahrbahnen bzw. Pfaden orientieren, oder aber regelbasiert an vorgegebenen Stücken. Des weiteren können Regionen der Umgebung als für die Roboterbewegung nicht zulässig definiert werden, was insbesondere auch in einer virtuellen / digitalen Darstellung (z.B. Markieren von verbotenen Regionen für den Roboter in Bereichen des Labors, welche z.B. weiter nur für Menschen zugänglich sein soll), insbesondere einer Karte des Laborbereichs, möglich ist. Der technische Effekt besteht darin, dass die Navigationseinheit diese Bereiche bei der Planung berücksichtigt und der Roboter diese Bereiche dann in der Ausführung vermeidet.

Der Trajektorienplanungsalgorithmus kann auf der Navigationseinheit ausgeführt werden und implementiert vorzugsweise eine SLAM (Simultaneous Localization and Mapping) Funktionalität. Dazu umfasst die Navigationseinheit eine Positionsbestimmungseinheit zur exakten Positionsbestimmung innerhalb des Betriebsbereichs mit ausreichender Genauigkeit und eine Kartenerzeugungseinheit zum inkrementellen Erzeugen einer Karte des Betriebsbereichs. Der Trajektorienplanungsalgorithmus dient zur Bewegungssteuerung des Assistenzroboters an sich. In einer bevorzugten Ausführungsform der Erfindung umfasst die Navigationseinheit vorzugsweise auch eine Lokalisierungseinheit. Die Lokalisierungseinheit kann grundsätzlich unabhängig von der Mapping-Funktionalität (SLAM-Funktionalität) betrieben werden, da gegebenenfalls eine Karte bereits vorhanden sein kann, die nur eingelesen werden braucht und nicht rechenintensiv und kontinuierlich erzeugt werden muss. Kumulativ oder alternativ kann eine kontinuierliche Aktualisierung der Karte ausgeführt werden.

In einer bevorzugten Ausführungsform der Erfindung kann der Assistenzroboter mit einem User Interface (UI) ausgebildet sein, das zur Anzeige der aktuell transportierten und/oder gelagerten Objekte und/oder von Metainformationen bestimmt ist, umfassend eine Zeitdauer, eine Identifikation des jeweiligen Objektes und/oder einer Repräsentation der anstehenden Aufgaben. Das UI kann insbesondere dazu genutzt werden, um dringende und/oder ungeplante Aufgaben vom Personal entgegenzunehmen. Dazu kann ein Scheduler vorgesehen sein, der die Flotte von Robotern orchestriert und übergeordnet steuert. Der Scheduler kann einen Entscheidungsalgorithmus ausführen, um z.B. zu entscheiden, ob der Roboter, an dem das UI befestigt ist, die Aufgabe nicht ausführt, da sie manuell - vom Personal - ausführt wird, oder ob ein anderer Roboter mit Blick auf den Gesamtworkflow geeigneter wäre und diesen damit beauftragen kann (mit entsprechender Rückmeldung über das UI).

Kumulativ oder alternativ kann auf dem Assistenzroboter ein Modifikationsalgorithmus ausgeführt werden. Der Modifikationsalgorithmus dient zur Verifikation der anstehenden geplanten Aufgaben und/oder zur Modifikation der Aufgaben. Dazu werden Eingaben des Anwenders auf dem UI durch den Modifikationsalgorithmus prozessiert. Dies hat den technischen Effekt, dass vorgeplante Arbeitsabläufe lokal verändert werden können, wenn z. B. Prioritäten aufgrund aktueller Ereignisse geändert werden sollen. Das UI kann lokal an dem Assistenzroboter befestigt sein. Das UI kann alternativ oder kumulativ an einer entfernten Stelle angebracht sein (z.B. auf einem mobilen Endgerät, wie einem Tablet, das einem anderen Ort liegt). Auch beides ist möglich, um Ausgaben sowohl lokal als auch an einer übergeordneten Steuereinheit bereitstellen zu können. Das UI muss somit nicht zwingend fix mit dem Assistenzroboter verbunden sein; es genügt eine Datenverbindung. Das UI kann auch als ein akustisches UI ausgebildet sein, um eine Sprachsteuerung des Roboters umzusetzen. Kumulativ oder alternativ kann das UI auch einfache Statusanzeigen umfassen, wie z.B. LEDs, Notaus-Signalgeber, etc.

In einer bevorzugten Ausführungsform der Erfindung kann an dem Korpus des Roboters zumindest ein Hilfsaggregat befestigt sein, das angeordnet und ausgelegt ist, um mit dem zumindest einem Greifarm und insbesondere dessen Endeffektor zusammenzuwirken. Bei den Hilfsaggregaten kann es sich z.B. um einen Mechanismus zur Präparation und Inspektion der Objekte, insbesondere von flüssigen Proben und/oder Reagenzien handeln.

In einer bevorzugten Ausführungsform der Erfindung kann ein Hilfsaggregat mit der Identifikationseinrichtung interagieren. So kann auf dem Hilfsaggregat und/oder auf der Identifikationseinrichtung ein Mustererkennungsalgorithmus ausführbar sein, der dazu ausgebildet ist, die visuelle Inspektion, z.B. zur Vorbereitung von Reagenzien, automatisiert auszuführen. Der Mustererkennungsalgorithmus kann z.B. zur Erkennung von Schaumbildung und/oder zur Verteilung von Teilchen im Reagenz-Pack auf Basis von optischen Messdaten ausgebildet sein.

In einem anderen Aspekt betrifft die Erfindung ein System zum Bewegen und/oder Manipulieren von Objekten, insbesondere Proben, insbesondere flüssigen Proben und/oder Reagenzien und/oder Geräten, in einem medizinischen Arbeitsbereich, insbesondere in einem in-vitro-diagnostischen Labor zur Analyse der Proben mit einer Vielzahl von mobilen autonomen kollaborativen Assistenzrobotern, wie vorstehend beschrieben, die untereinander in Datenaustausch stehen und die lokal und/oder von einem übergeordneten Flottensteuerungsprogramm gesteuert werden. Die (mehreren) mobilen autonomen kollaborativen Assistenzroboter können auch zur Erfüllung einer gemeinsamen Aufgabe kollaborieren, z. B. transportierte Objekte an einen anderen Roboter übergeben, um die Effizienz der Abläufe zu verbessern oder Handhabungen vorzunehmen, die nur speziellen Robotern vorbehalten sind. Weiterhin können die Assistenzroboter auch gemeinsam eine Aufgabe lösen, z.B. schwere Lasten bewegen.

In einem weiteren Aspekt betrifft die Erfindung ein Verfahren zum automatisierten Bewegen und/oder Manipulieren von Objekten, insbesondere Proben, insbesondere flüssigen Proben und/oder Reagenzien und/oder Geräten, in einem medizinischen Arbeitsbereich, insbesondere in einem in-vitro-diagnostischen Labor zur Analyse der Proben mit zumindest einem mobilen autonomen kollaborativen Assistenzroboter, wie vorstehend beschrieben, umfassend folgende Verfahrensschritte:
- Einlesen einer digitalen Aufgabe aus einer digitalen Repräsentation einer Aufgabenliste; dabei kann die Bestimmung, in welcher Reihenfolge die Aufgaben der Liste abgearbeitet werden sollen, bereits am Assistenzroboter und/oder an einem externen Kommunikationscomputer stattfinden.
- Lokale und/oder globale Trajektorienplanung zur Abarbeitung der Aufgabe; Die Trajektorienplanung kann sich dabei auf die Bewegung des Korpus bzw. der mobilen Plattform des Roboters und/oder auf die Bewegung seiner Endeffektoren beziehen. In einer bevorzugten Ausführungsform der Erfindung sind beide der vorstehend genannten Bewegungsplanungsaufgaben kombiniert. Die kombinierte Trajektorienplanung der Plattform und des Endeffektors vergrößerte den Arbeitsraum des Endeffektors und ermöglicht eine bessere Effizienz, indem Arbeitsschritte des Endeffektors bereits koordiniert ausgeführt werden, während die Plattform noch (zu einer Zielposition) in Bewegung ist. Damit kann zumindest ein Teil der Bewegungsaufgabe des Endeffektors sozusagen von der Plattform übernommen werden und umgekehrt.
- Berechnen von Steueranweisungen und/oder Erfassen von bereitgestellten Steueranweisungen über die Kommunikationseinheit zur Abarbeitung der Aufgabe; der Assistenzroboter kann mittels der Aktorik (elektrischer Antrieb, Manipulator, etc.) durch Ausführung der Steueranweisungen die Aufgabe mit den berechneten Aktionen ausführen und abarbeiten. Die Aufgabe kann nach kundenspezifischen Umgebungsbedingung adaptiv angepasst sein.
- Erfassen von Sensorsignalen bei der Abarbeitung der Aufgabe und
- Kommunikation der erfassten Sensorsignale an eine interne und/oder externe Prozessoreinheit. Bei der externen Prozessoreinheit kann es sich insbesondere um ein Inventory Management System zum Verwalten von Verbrauchsmaterialien, wie z.B. Reagenzien oder Disposables, handeln. Der Assistenzroboter und/oder die externe Prozessoreinheit (z.B. Flottenmanagementsystem) trackt den Verbrauch, den aktuellen Ort, das Ablaufdatum und/oder den Lagerbestand der Verbrauchsmaterialien und gibt bei Unterschreitung einer kritischen Schwelle eine Meldung zur Prädiktion des Lagerbestandes auf einem UI aus oder leitet die Meldung an ein Laborinformationssystem, LIS, zur Beauftragung einer neuen Bestellung weiter.

Grundsätzlich kann das vorstehend genannte System mehr als nur eine Instanz des Roboters bzw. der Varianten des Roboters umfassen. Dabei können sich die mehreren Roboter vorteilhaft verschiedenen Aufgaben widmen. Ein übergeordnetes Planungssystem dient zum Scheduling der Aufgaben und steht dazu mit dem Roboter in Datenaustausch. Insbesondere in Fällen, in denen die lokale Rechenpower des Roboters nicht ausreicht, um eine Aufgabe zu lösen, kann es vorgesehen sein, eine externe Recheneinheit anzubinden, quasi um das lokale System von außerhalb zu unterstützen. Kumulativ oder alternativ könnte es vorteilhaft sein, den Roboter von einer entfernten Umgebung teleoperiert verwenden zu können, beispielsweise im Fehlerfall zur Fehlerkorrektur. Kumulativ oder alternativ könnte der Roboter an ein Raummanagementsystem angeschlossen sein, so dass z.B. Türen per (elektronischen) Befehl automatisch aufgehen oder der Aufzug nach Betreten des Roboters das Stockwerk wechselt.

In der folgenden detaillierten Figurenbeschreibung werden nicht einschränkend zu verstehende Ausführungsbeispiele mit deren Merkmalen und weiteren Vorteilen anhand der Zeichnung besprochen.
Fig. 1 zeigt in einer schematischen perspektivischen Übersichtsdarstellung einen Laborassistenzroboter, der für den Betrieb in einem in-vitro-diagnostischen Labor ausgelegt ist mit weiteren Bauteilen gemäß einer bevorzugten Ausführungsform der Erfindung;
Fig. 2 zeigt einen Greifarm des Laborassistenzroboters mit schematisch angedeuteten Bewegungsoptionen in einer Draufsicht gemäß einer bevorzugten Ausführungsform der Erfindung;
Fig. 3 zeigt eine alternative Ausbildung einer Hubachse des Laborassistenzroboters mit zwei Greifarmen;
Fig. 4 zeigt eine Seitenansicht des Laborassistenzroboters gemäß einer weiteren bevorzugten Ausführungsvariante der Erfindung;
Fig. 5 zeigt eine Seitenansicht des Laborassistenzroboters mit einer Identifikationseinrichtung in Form eines Scanners;
Fig. 6 stellt ein Abflussdiagramm eines Verfahrens zum Bewegen und/oder Manipulieren von Objekten und insbesondere flüssigen Proben dar.

Innerhalb von In-Vitro-Diagnostischen Laboren (Referenzlabore oder Krankenhäuser) kommen Analysesysteme verschiedener Hersteller für verschiedene Anwendungsbereiche zum Einsatz (z.B. Klinische Chemie, Immunoassay, Hämatologie, Hämostase, Molekulare Diagnostik, Mikrobiologie). Siemens Healthineers bietet hier ein breites Portfolio an, beispielsweise hochflexible Lösungen für die Klinische Chemie und die Immundiagnostik. Das System besteht aus drei Grundkomponenten: Sample Handler, klinisch-chemisches System und Immunoassay-System. Als zentrales Verbindungselement zwischen Probeneingang und Analysesystemen ermöglicht eine magnetische Probentransport-Technologie völlig neue Optionen für die Steuerung und Kontrolle der Proben.

Darüber hinaus werden die Systeme prozesstechnisch meist von eigenen Prozessmanagern betrieben. Damit können Arbeitsabläufe und Prozesse gesteuert und auch effizienter gemacht und gleichzeitig der klinische Betrieb optimiert werden, um Zeit und Geld zu sparen. Dies führt zu einer erhöhten Mitarbeiterproduktivität unter anderem durch eine zentrale Übersicht mit der Möglichkeit, sämtliche Systeme über einen einzigen Bildschirm zu steuern sowie Reagenzienbestände und Ausnahmeregeln für Tests anzeigen zu lassen. Die IVD-Systeme sind zusätzlich auch an Laborinformationssysteme (LIS) oder Laborinformationsmanagementsysteme (LIMS) angebunden zum Zwecke einer übergeordneten Laborverwaltung.

Heute werden IVD-Systeme bzw. Lösungen jedoch weiterhin hauptsächlich von Fachkräften, beispielsweise von sogenannten Medical Laboratory Assistants befüllt (mit Patientenproben, Reagenzien, Hilfsreagenzien, Verbrauchsmaterialien etc.), bedient und entleert (Müllentsorgung). Hauptanwendungsfelder in der Analytik sind:
- Sample Management;
- Reagent Management;
- Fluid Management;
- Sample Archiving.

Hinzu kommen Aufgaben in der Pre- und Postanalytik.

Um den manuellen Aufwand und auch die Fehleranfälligkeit aufgrund von z.B. Vertauschungen zu reduzieren, schlägt die vorliegende Erfindung ein automatisches Laborassistenzsystem vor, das im Folgenden genauer in Zusammenhang mit den Figuren beschrieben wird.

Grundsätzlich schlägt die Erfindung den Einsatz eines autonomen mobilen Assistenzroboters oder einfach Roboters vor, welcher wesentliche Aufgaben einer menschlichen Fachkraft (also z.B. eines Medical Laboratory Assistant) vor allem in der Analytik direkt am IVD-System oder der IVD-Lösung automatisiert bzw. (teil-) autonom ausführen kann, also eine automatisierte bzw. autonome Gerätebedienung. Diese Aufgaben sind unter anderem:
- Sample Management (Beladen und entladen der IVD-Systeme mit Patientenproben)
- Reagent Management (unter anderem Beladen und Entladen der Kühlschränke mit Reagenzien). Beladen und entladen der IVD-Systeme mit Reagenzien.
- Fluid Management
- Sample Archiving
- Waste-Management. Entleeren des Mülls des IVD-Systems
- Management der Verbrauchsmaterialien (z.B. Beladen und Entladen der IVD-Systeme mit Küvetten, Probenspitzen, Reinigungsflüssigkeiten)
- Hinzu kommen Aufgaben in der Pre- und Postanalytik (z.B. Probenvorbereitung und Probentransport).

Der autonome Laborroboter soll hierbei sowohl IVD Systeme/Geräte von Siemens Healthineers, aber auch von externen Herstellern mit den dargestellten Funktionen/ Technologien automatisiert bedienen können. Hierfür werden statische Daten (z.B. Laborlayout, Gebäudeinformationen über statische Karte, Gerätelayout/-design über CAD-Modelle und reale Bilder) und dynamische Daten (z.B. aus LIS, LIMS, Middleware-Software, digitale Bilder von Umgebung, Objekten, Menschen, dynamische Bewegungsdaten etc.) verarbeitet, die live (oder optional in real-time) über Sensoren und/ oder das Kommunikationsmodul erfasst (und optional kombiniert werden) und mittels eines Rechners und Software-Algorithmen (optional AI-basiert) verarbeitet werden, um autonom in einer dynamischen Umgebung navigieren zu können und Arbeitsaufträge autonom durchführen zu können. Der Software-Algorithmus ist dabei selbst lernend und selbst optimierend (z.B. optimale Durchführung einer Aufgabe wie Öffnen eines Deckels eines IVD-Gerätes).

Für die Umgebungswahrnehmung soll ein (optional: AI-basiertes) Software/ Hardware-System zum Einsatz kommen, das zur Objekterkennung und Trajektorienplanung dient. Die Objekterkennung kann auch semantisch basiert sein, um den erkannten Objekten jeweils einen identifizierenden Begriff zuzuordnen und ggf. diesen auf einer Benutzerschnittstelle auszugeben. Die entsprechende HW (z.B. Kamera) soll direkt an der Roboterhand bzw. am Endeffektor oder an alternativen geeigneten Anbringungsmöglichkeiten an der Plattform des autonomen Laborroboters oder auch an Geräten und Instrumenten im IVD-Test-Labor angebracht werden können. Zur Optimierung der Umgebungswahrnehmung, Objekterkennung und Trajektorienplanung sollen optional weitere Informationen verarbeitet werden, unter anderem:
- Standard-Marker im Labor (z.B. Barcodes, QR-Codes etc.) an IVD-System, am Boden, Decke, Wände oder weiterem Equipment wie Tische, Kühlschränke, Türen etc.
- HW/SW-basierte Auswertung und Nutzung der bestehenden Layout-bedingten Merkmale der festinstallierten IVD-Systeme (z.B. bestimmte Formen an Kanten, Ecken, Rändern der Geräte wie eine Schublade, ein Deckel etc.)
- HW/SW-basierte Auswertung und Nutzung der verfügbaren Informationen von festinstallierten Geräten: z.B. ein festinstalliertes IVD-System/ Gerät verfügt über ein (zumindest virtuelles) Koordinatensystem, welches für Tracking und Regelung vom mobilen Roboter bzw. lokale Navigation und Trajektorienplanung genutzt werden kann.

In einer bevorzugten Ausführungsform der Erfindung können auf dem autonomen Laborroboter feste oder lösbare mechanische Hilfsvorrichtungen zum Manipulieren von Objekten ausgebildet sein, um z.B. Schubladen oder Deckel an den IVD-Systemen/ Geräten öffnen und/oder schließen zu können. Weitere feste Hilfsvorrichtungen können auch nötig sein, um beispielsweise Verpackungen von Reagenzien oder Tüten von Verbrauchsmaterial wie Küvetten zu öffnen, gebrauchte (jedoch noch nicht ganz leere) Reagenzien-Packs zu verschließen oder Patientenproben (Patient-Tubes) zu verschließen etc.

In einer weiteren bevorzugten Ausführungsform der Erfindung kann eine integrierte Kühleinheit (15-25 Grad Celsius bzw. 2-8 Grad Celsius) für den Transport von Blutproben und/ oder den Transport von Reagenzien ausgebildet sein.

In einer weiteren bevorzugten Ausführungsform der Erfindung kann ein integrierter Feeder für Küvetten, Sample Tips (Probenspitzen) und weiteres Verbrauchsmaterial ausgebildet sein.

In einer weiteren bevorzugten Ausführungsform der Erfindung kann der Roboter ein integriertes Lagersystem/ Transportsystem für PCR Microplates verschiedener Typen für das Anwendungsgebiet Molecular Diagnostics auf PCR-Basis (Polymerase chain reaction) bereitstellen oder mit diesem interagieren.

Grundsätzlich kann der Roboter für IVD-Labore ausgelegt sein. Kumulativ oder alternativ kann er auch für den Betrieb in der Pathologie und/oder Mikrobiologie mit entsprechenden Microbiology Panels bzw. Petrischalen ausgelegt sein.

Der autonome Laborroboter verfügt über ein Kommunikationsmodul. Dieses kann folgende Funktionalität bereitstellen:
- Per Spracherkennung ("Hey Rob") definierte Roboter-Aktionen ausgeführt werden können (z.B. "Stop"). Dieses System ist optional selbstlernend.
- Per Scanner kann ein Standard-Code eingelesen werden, um einen Arbeits-Auftrag auszuführen und/oder ein Objekt zu identifizieren (z.B. QR-Code, Barcode).
- Kabellos (wireless, ggf. IoT, optional: real-time) wird eine Verbindung zu IVD-Systemen/ Geräten hergestellt, um einen Arbeits-Auftrag auszuführen und rückzumelden (z.B. Nachfüllen von Reagenzien-Packs).Der Datenaustausch erfolgt vorwiegend über proprietäre Datenformate oder durch Nutzung von Standards (z.B. SILA, HL7, IICC, CLSI oder ähnlich.
- Kabellos (wireless, ggf. IoT, optional: real-time) wird eine Verbindung zu Middleware-Softwaresystemen oder Laborinformationssystemen (LIS, LIMS) hergestellt, um einen Arbeits-Auftrag auszuführen und rückzumelden. Der Datenaustausch erfolgt über proprietäre Datenformate oder durch Nutzung von Standards (z.B. SILA, HL7, IICC, CLSI oder ähnlich.

Der Laborroboter soll die Gerätebedienung von labortechnischen und/oder medizinischen Geräten und insbesondere IVD-Geräten von unterschiedlichen Herstellern automatisiert und autonom bedienen können. Vorhandene Lösungen sind nicht mobil (stationäre Roboter) und automatisieren Aufgaben in der Logistik bzw. Pre- und Post-Analytik, jedoch nicht in der Analytik selbst (Bedienung von IVD-Systemen/ Geräten).

Der autonome Laborroboter ist mobil bzw. portabel und navigiert zur Lösung der ihm übermittelten Aufgabe kollisionsfrei durch seine Umgebung.

Mit dem Einsatz des autonomen Laborroboters kann die Qualität erhöht werden beispielsweise durch präzise und automatisch dokumentierte Kalibrier-, Vorbereitungs- und Beladungs-/Entladungsprozessen. Weiterhin können die Arbeitsprozesse durch zeitgerechte Beistellung und Entsorgung von Verbrauchsmaterial und durch das schnelle Handling und die Archivierung von Patientenproben deutlich beschleunigt werden. Weiterhin kann die Warenwirtschaft mit Verwaltung, Lagerung und Transport für die effiziente Nutzung von Verbrauchsmaterialien automatisiert werden. Ein mobiler Roboter mit vergleichbarer Kinematik ist auch geeignet als Assistent in der medizinischen Versorgung von Patienten sowie in Operationssälen, z.B. um dem sterilen Team während der OP-Verbrauchsmaterialien aus dem nicht sterilen Bereich anzuliefern und steril zu übergeben.

Der Roboter ist in einer bevorzugten Ausführungsform der Erfindung so konstruiert, dass er den für menschliche Mitarbeiter üblicherweise erreichbaren Arbeitsraum (Fußbodennähe bis ca. 1,8 ... 2 Meter Höhe) und horizontale Reichweite mindestens ca. 0,5 ... 0,7 Meter vollständig abdeckt und dabei auch mit fragilen Objekten (da flüssigen Proben) beschädigungsfrei interagieren und/oder diese manipulieren und/oder bewegen kann. Er verfügt über eine ausreichende Tragfähigkeit, um die für menschliche Mitarbeiter üblichen Aufgaben uneingeschränkt erfüllen zu können. Weiter ist er zur aufgabengemäßen Wahrnehmung der Umgebung für eine sichere und kollisionsfreie Bewegungen sowie zur Lokalisierung von Objekten ausgebildet, die gegriffen und hantiert werden sollen. Der Roboter führt die ihm zugewiesenen und insbesondere vorher trainierten Aufgaben in unterschiedlicher Umgebung und unter veränderlichen Bedingungen autonom aus. Der Roboter hat einen robusten Aufbau für eine zuverlässige Funktion und einen hohen Grad an Verfügbarkeit. Die Kosten zur Herstellung und Wartung des Roboters sind relativ gering.

Ein wesentlicher Nachteil von aus dem Stand der Technik bekannten Robotern (Cobots) ist darin zu sehen, dass die bekannten Cobot-Lösungen eine Gelenkarm-Kinematik mit 6 oder 7 Freiheitsgraden verwenden, die im Wesentlichen eine kugelförmigen Arbeitsraum abdeckt. Aufgrund ihrer Kinematik können sie z. B. auf die oberen und unteren Ebenen von Lagerregalen, die von Menschen leicht erreicht werden, nur sehr eingeschränkt zugreifen. Mit zunehmender Reichweite, d. h. mit ansteigendem Drehmomentbedarf in den Gelenken reduziert sich mögliche Traglast dieser Roboterbauart. Die Verlängerung der Armsegmente zur Vergrößerung der Reichweite von Gelenkrobotern erschwert den Zugriff in beengtem Umfeld. Das Ellenbogengelenk und die räumliche Ausrichtung der Armsegmente führt häufig zu Kollisionen in der Umgebung. Roboter mit reiner Gelenkkinematik wie im Stand der Technik, benötigen häufig komplexe Trajektorien für relativ einfache Handhabungen, wie z. B. lineare Bewegungen zum Öffnen und Schließen einer Schublade. Durch die Verwendung der linearen Hubachse finden die Bewegungen der Roboterarme im Wesentlichen nur in einer horizontalen Ebene statt und sind damit weniger komplex als die räumlichen Bewegungen von üblichen Gelenkrobotern. Durch die Kombination mit der vertikalen Bewegung der Hubachse kann auf relativ einfache und gut überschaubare Weise der gesamt Arbeitsraum abgedeckt werden. Die Kollisionsgefahr des Roboterarms ist vorteilhafterweise immer beschränkt auf den Höhenbereich, in dem er von der Hubachse zum aktuellen Zeitpunkt positioniert wird. Bei räumlichen Gelenkrobotern bestehen Kollisionsrisiken auch in anderen Höhenbereichen, durch die der Arm hindurch greift.

Ein wichtiger Aspekt beim Einsatz des erfindungsgemäßen Laborassistenzroboters ist mitunter darin zu sehen, dass er mit menschlichem Personal und insbesondere auf engem Raum interagieren und/oder kooperieren muss. Dabei darf es nicht zu Kollisionen kommen. Eine Gefahr besteht darin, dass der Roboter unvorhersehbare Bewegungen aufgrund seiner Gelenkkinematik, insbesondere der Ellenbogengelenkkinematik ausführt, die zu Verletzungen und/oder Beschädigung führen können. Deshalb ist es wichtig, eine Ellenbogengelenk Kinematik bereitzustellen, die einen sicheren Betrieb im Labor oder im medizinischen Umfeld ermöglicht. Des weiteren soll die Nutzlast erhöht werden. Deshalb kann es in einer vorteilhaften Ausführungsform der Erfindung vorgesehen sein, dass interne notwendige Bauteile, wie beispielsweise eine Kamera und/oder weitere Sensoren nicht am Endeffektor befestigt werden. Dies ist jedoch auch anders realisierbar.

Die vorgeschlagene Roboterkinematik verwendet eine lineare Liftachse, die um mindestens 360° drehbar ist. Der daran befestigte Roboterarm kann damit das umgegebene Zylindervolumen uneingeschränkt erreichen. Im Vergleich mit dem kugelförmigen Arbeitsraum eines üblichen Gelenkroboters, ermöglicht der zylindrische Arbeitsraum deutlich bessere Erreichbarkeit in allen Höhen. Durch die horizontale Ausrichtung kann der Roboterarm von Bodennähe bis zur oberen Grenze des Arbeitsraums Objekte auf allen Ebenen ohne Einschränkungen erreichen und hantieren. An der Liftachse können Kameras und/oder weitre Sensorsysteme befestigt werden, die mit der Drehung der Liftachse immer fix auf den Arbeitsbereich des Roboterarms ausgerichtet bleiben. Je nach Anordnung der Liftachse kann der Roboterarm z.B. einen großes Segment neben der mobilen Plattform bis herunter auf die Höhe des Fußbodens erreichen. Oberhalb der mobilen Plattform kann der Roboterarm den gesamten Bereich rundum ohne Einschränkungen erreichen.

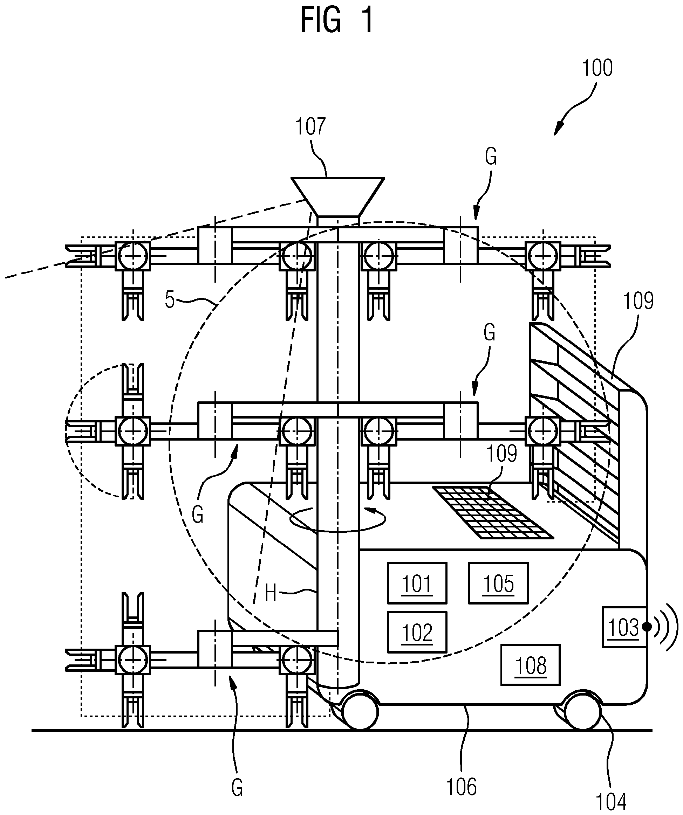

In Figur 1 ist ein Laborassistenzroboter 100(im folgenden kurz: Roboter genannt) dargestellt der Roboter weist eine Antriebsvorrichtung 104 auf und ist somit mobil. Der Roboter 100 ist platzsparend konstruiert und kann eine vorwiegend rechteckige oder zylindrische dreidimensionale Form aufweisen. Der Roboter 100 umfasst eine Navigationseinheit 101, eine lokale Prozessoreinheit 102, eine digitale Schnittstelle in Form einer Kommunikationseinheit 103 zum Austausch von Daten, Steueranweisungen, Sensordaten und/oder Applikationen. Des weiteren umfasst der Roboter 100 eine Energieversorgungseinrichtung 105 zur lokalen Energieversorgung und eine Identifikationseinrichtung 108 zur eineindeutigen Identifikation der Objekte und insbesondere der Proben und Reagenzien und vorzugsweise auch zur Identifikation des Inhalts von Probenröhrchen oder Reagenzien. Der Roboter 100 weist des weiteren einen Ablagebereich 109 auf, der zur Aufnahme von Probebehältern (tubes), Reagenz-Packs, Trays, Racks und/oder sonstigen Objekten, die bei der Analyse von Proben relevant sind und gegebenenfalls transportiert werden müssen. Wie in Figur 1 ersichtlich, kann der Ablagebereich 109 mehrere Segmente umfassen, die an unterschiedlichen Positionen des Roboters 100 angeordnet sind. Insbesondere kann sich eines der Segmente auf einer Oberseite eines Korpus 106 des Roboters 100 befinden, um zum Beispiel eine schnelle Zwischenlagerung von Objekten gewährleisten zu können. Des weiteren kann ein Segment an einer Außenkante des Korpus 106 ausgebildet sein, das regalartig ausgeformt ist. Das Segment kann sich über dem Korpus 106 des Roboters 100 befinden oder kann leicht nach schräg außen weisend auskragen.

Der Roboter 100 umfasst des Weiteren eine Hubachse H, die drehbar an dem Korpus 106 gelagert ist. Die Hubachse H erstreckt sich im wesentlichen vertikal nach oben und weist eine vorzugsweise vorwiegend senkrechte Mittellängsachse auf. Auf der Hubachse H ist ein vertikal beweglicher und um die Hubachse H drehbarer Schlitten S gelagert. An dem Schlitten S ist ein Greifarm G befestigt, der sich mit seinen Bauteilen im wesentlichen senkrecht zur Hubachse H bewegen kann. Insbesondere kann der Greifarm G in einem Winkelbereich zwischen 0° und 360° um die Achse H rotieren. Am Hubarm-fernen Ende des Greifarms G kann zumindest ein Endeffektor G3 angeordnet sein. Der Endeffektor G3 dient zur Interaktion mit den Objekten und zum Beispiel zum Greifen und/oder Ablegen der Probenbehälter oder Reagenz-Packs.

Die Hubachse H ist vorzugsweise in einem Eckbereich des Korpus 106 angeordnet und grenzt somit an eine kurze und an eine lange Kante des Korpus 106 an. Dies hat den technischen Vorteil, dass ein möglichst großer Bereich auf einer Oberseite des Korpus 106 als Ablagebereich 109 oder für andere Funktionalitäten nutzbar ist. Die genaue Positionierung der genannten Bauteile des Roboters 100 kann jedoch je nach Ausführungsform variiert werden.

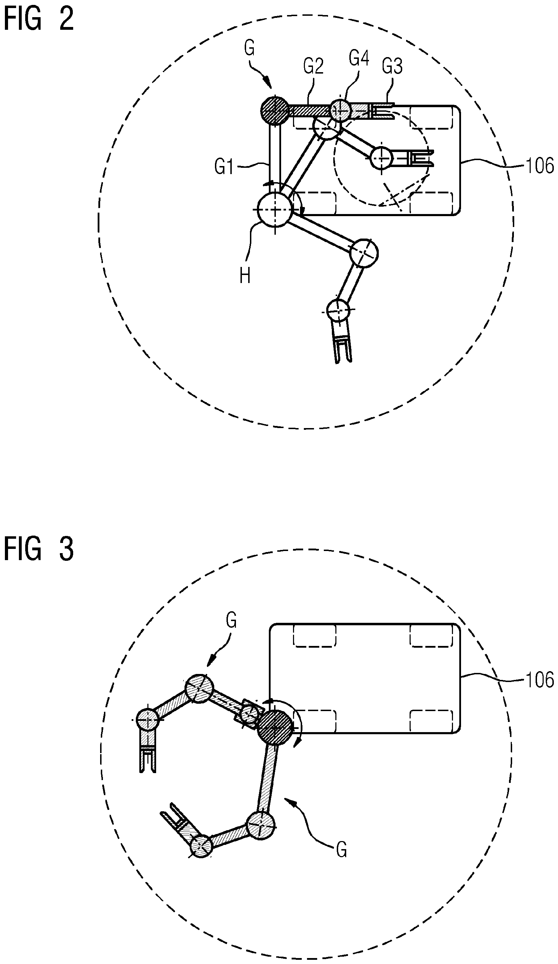

Figur 2 zeigt in einer schematischen Darstellung die Draufsicht eines Roboters 100. In diesem Beispiel sieht man, dass die Außenkontur des Korpus 106 annähernd rechteckig ist und abgerundete Kanten aufweist, um das Bewegen und den Betrieb des Roboters 106 zu vereinfachen. Die Hubachse H im linkeren unteren Eckbereich angeordnet und trägt den Greifarm G. Der Greifarm G umfasst ein hinteres Armsegment G1 und ein vorderes Armsegment G2 sowie einen Endeffektor G3. In einer einfachen Ausführungsvariante kann der Endeffektor G3 direkt an dem vorderen Armsegment G2 befestigt sein. In der bevorzugten Ausführungsform ist der Endeffektor G3 jedoch nicht direkt und unmittelbar an dem vorderen Armsegment G2 befestigt, sondern nur mittelbar über einen Adapter G4. Der Adapter G4 dient als Wechselvorrichtung. Letzteres hat den Vorteil, dass der Greifarm G modular aufgebaut sein kann und einen einfachen Austausch von unterschiedlichen Endeffektoren G3 ermöglicht. Damit kann das System sehr einfach und flexibel auf den jeweiligen Anwendungsfall angepasst werden. In Figur 3 sieht man auch nochmals die Rotationsoptionen des Greifarms G mit seinen gelenkig gelagerten Armsegmenten G1, G2, G3. Die Gelenksachsen der jeweiligen Gelenkverbindungen für die Armsegmente G1, G2, G3 verlaufen - der Hubachse H entsprechend - im wesentlichen vertikal.

Fig. 3 zeigt in einer weiteren Übersichtsdarstellung ein Ausführungsbeispiel, bei dem auf der Hubachse H zwei Greifarme G gelagert sind. Selbstverständlich können auch mehr als zwei Greifarme G an dem Roboter 100 ausgebildet sein. Die jeweiligen Endeffektoren G3 der beiden Greifarme G können vorzugsweise so angesteuert werden, dass sie gemeinsam auf koordinierte Weise angesteuert werden, um eine Aufgabe zusammen zu lösen, wie beispielsweise das Halten und gleichzeitige Gegenhalten von Objekten, was beispielsweise beim Auf-/oder Zudrehen von Verschlüssen erforderlich ist.

In einer weiteren bevorzugten Ausführungsform der Erfindung kann die Plattforma auch mehr als eine Hubachse aufweisen. So könnte jeweils eine Hubachse beispielsweise an gegenüberliegenden Kanten der Plattform ausgebildet sein, an denen Greifarme und/oder weitere Bauteile montiert sind.

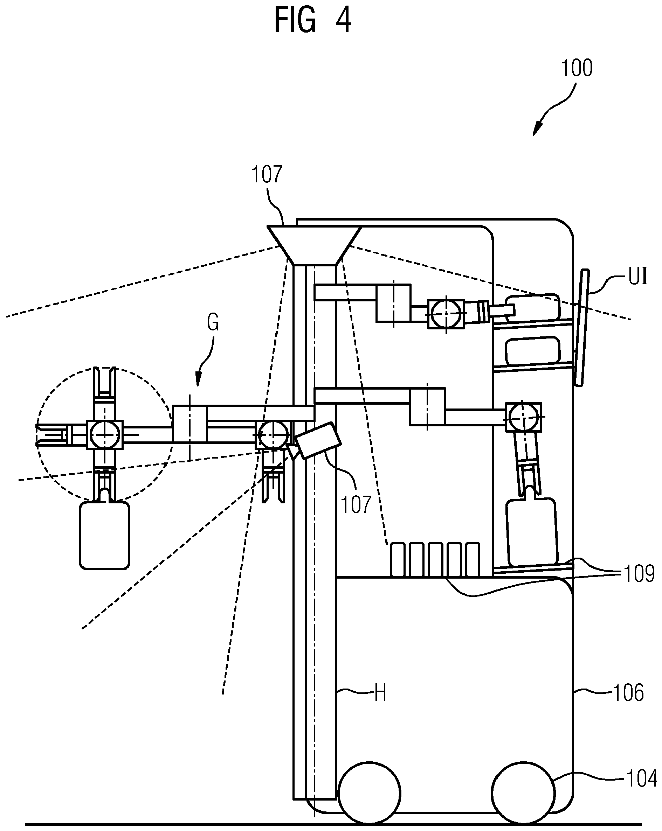

Fig. 4 zeigt ein weiteres Ausführungsbeispiel eines Roboter 100 in einer Seitenansicht. Im Unterschied zu den vorherigen Ausführungsbeispielen erstreckt sich hier die Hubachse H annähernd über dieselbe Höhe, wie der Korpus 106. Im oberen Bereich der Hubachse H kann eine Sensoreinrichtung 107 und insbesondere eine Kamera angeordnet sein. Eine weitere Sensoreinrichtung 107 kann am Schlitten unterhalb des Greifarms G angeordnet sein. Dies ist insbesondere dann sinnvoll, wenn die vom Endeffektor G3 (vgl. Fig. 2, in Fig. 3 nicht separat bezeichnet) ergriffenen Objekte sich vorwiegend unterhalb einer Bewegungsebene des Greifarms G befinden. Alternativ oder kumulativ kann die Kamera 107 auch über dem Greifarm G angeordnet sein, wenn der sensorisch zu erfassende Bereich hauptsächlich über der Rotationsebene des Greifarms G liegt. In diesem Beispiel trägt die Hubachse H drei Greifarme G in unterschiedlichen Höhenabschnitten. Die jeweiligen Endeffektoren G3 der Greifarme G können positioniert und ausgebildet sein, um die ergriffenen Objekte in Ablagebereiche 109 abzulegen, die sich im Inneren des Roboters 100 und insbesondere im Inneren des Korpus 106 des Roboters 100 befinden. Wie in Figur 4 schematisch dargestellt, kann der Roboter 100 noch eine Benutzerschnittstelle UI umfassen. Die Benutzerschnittstelle UI kann in einem Höhenbereich an einer Außenwand des Korpus 106 ausgebildet sein, der in etwa der Augenhöhe einer stehenden Person entspricht, um eine ergonomische Bedienung der Benutzerschnittstelle zu ermöglichen. Die Benutzerschnittstelle UI (Menschmaschineschnittstelle) kann insbesondere als Touchpanel mit einem berührungssensitiven Display ausgebildet sein. Die Kameras 107 sind vorzugsweise derart angeordnet, dass sie die unterschiedlichen Ablagebereiche 109 des Roboters 100 detektieren. Dies ermöglicht, dass das fehlerfreie Positionieren der Objekte sichergestellt werden kann. Damit kann eine zusätzliche Überwachungsfunktionalität bereitgestellt werden. Dies erhöht die Sicherheit des automatischen, roboterbasierten Systems. Die sensorisch erfassten Daten (insbesondere die Daten der Kamera 107) können lokal auf einer Verarbeitung einer des Roboters ein und/oder zentral auf einem über eine entsprechende drahtlose Datenverbindung angeschlossenen Server prozessiert werden.

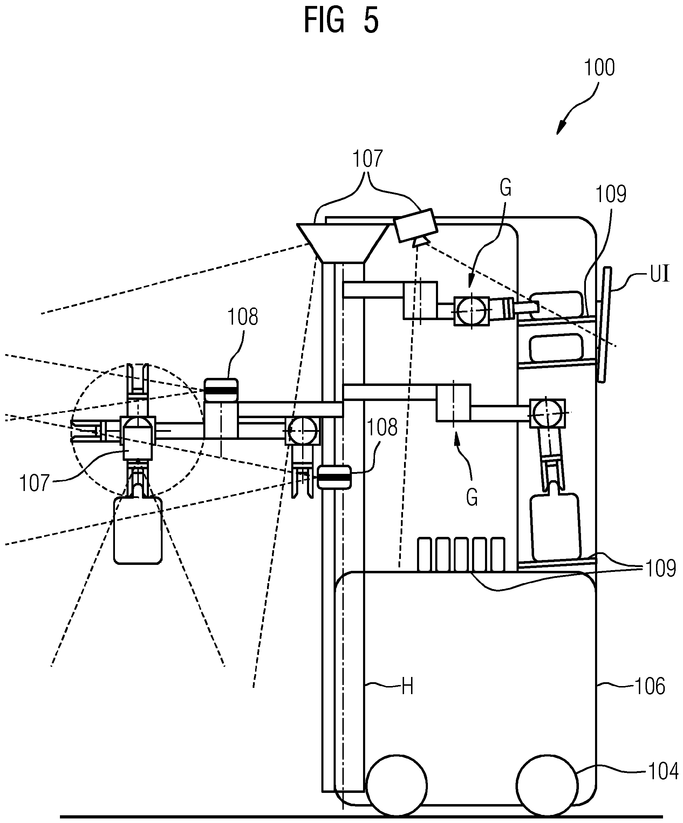

Fig. 5 zeigt in einer schematischen Seitendarstellung eines Roboters 100 ein Ausführungsbeispiel, bei dem der Roboter 100 zusätzlich zur Sensoreinrichtung 107 eine separate Identifikationseinrichtung 108 aufweist. Bei der Identifikationseinrichtung 108 kann es sich beispielsweise einen Laserscanner handeln. Der Laserscanner 108 kann zum Beispiel an dem Greifarm G und insbesondere an einem Gelenk im oberen Bereich angeordnet sein. Dies hat den Vorteil, dass die zu transportierenden Objekte, die vom Endeffektor G3 (vgl. Fig. 2, in Fig. 5 nicht explizit bezeichnet) gegriffen und/oder abgelegt werden auf einfache Weise und im wesentlichen ohne Zusatzbewegungen vom Laserscanner 108 detektiert werden können. Die von der Sensoreinrichtung 107 und/oder von der Identifikationseinrichtung 108 erfassten Signale (Bilddaten) werden von der lokalen Prozessoreinheit 102 und/oder von einer zentralen Verarbeitungseinheit (hier nicht dargestellt) weiterverarbeitet, die über eine entsprechende Datenverbindung an die lokale Prozessoreinheit 102 angebunden ist, nämlich über die Kommunikationseinrichtung 103 (vgl. Fig. 1). Insbesondere können die erfassten Daten zur Regelung des Roboters 100 zurückgeführt werden. Falls mehrere Endeffektoren G3 auf dem Roboter 100 ausgebildet sind, kann es vorteilhaft sein, auch mehrere Identifikationseinrichtungen 108 und/oder mehrere Sensoreinrichtungen 107 auszubilden, da es in diesen Fällen mehrere zu überwachende Bereiche gibt.

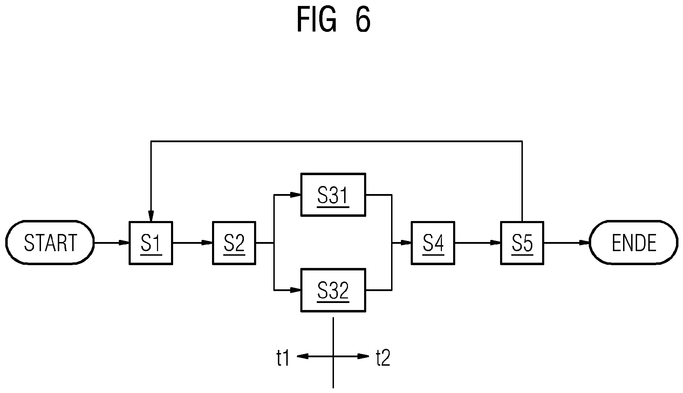

Fig. 6 zeigt ein Ablaufdiagramm eines Verfahrens gemäß einer bevorzugten Ausführungsform der Erfindung. Nach dem Start des Verfahrens erfolgt in Schritt S1 das Einlesen einer digitalen Aufgabe für den Roboter 100 aus einer digitalen Repräsentation einer Aufgabenliste. In Schritt S2 wird eine lokale und/oder globale Trajektorienplanung zur Abarbeitung der Aufgabe ausgeführt. Dabei werden die Bewegungspfade des Roboters 100, die Bewegungspfade der entsprechenden Endeffektoren G3 und/oder die Höhenverstellung der Hubachse definiert. In Schritt S31 werden Steueranweisungen berechnet und/oder in Schritt S32 werden Steueranweisungen über die Kommunikationseinheit eingelesen bzw. von der zentralen Verarbeitungseinheit erfasst. Die Steueranweisungen dienen zur Abarbeitung der Aufgabe. In Schritt S4 werden Sensorsignale bei der Abarbeitung der ggf. mehrschrittigen Aufgabe erfasst. Die Sensorsignale können in Schritt S5 - wie bereits vorstehend beschrieben - entweder an die interne Prozessoreinheit kommuniziert und lokal prozessiert werden und/oder über die Kommunikationseinrichtung an eine externe Prozessoreinheit zur dortigen Verarbeitung weitergeleitet werden. Wie in Figur 6 dargestellt, kann das Verfahren in zwei Zeitphasen unterteilt werden: in einer ersten Zweitphase t1 können Planungsschritte ausgeführt werden, insbesondere des Schritte S1, S2, S31, S32 und in einer zweiten Zeitphase t2 kann der Laborassistenzroboter zur Ausführung der ihm zugewiesenen Aufgabe angesteuert werden, mit den Schritten S4, S5.

Ein vorteilhaftes Merkmal der Erfindung und des Assistenzroboters ist die Verwendung einer drehbaren Hubachse als Träger für den Roboterarm, so dass ein zylindrischer Arbeitsraum von Fußbodenhöhe bis ca. 2 m Höhe abgedeckt werden kann. Gleichzeit wird eine hohe Traglast erreicht und eine gute Zugänglichkeit des Roboterarms zu den verschiedenen Ebenen, auf denen hantiert oder zugegriffen werden soll.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren. Auch müssen die Schritte des Verfahrens nicht notwendigerweise in der angegebenen Reihenfolge ausgeführt werden. So können einzelne Verfahrensschritte beispielsweise auch parallel ausgeführt werden.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Bewegungs- und Manipulationsaufgaben in IVD-Laboren angewendet werden kann, sondern auch für andere roboter-gestützte Geräte, die im klinischen Betrieb und zum Beispiel intra-operativ im Operationsraum eingesetzt werden. Des Weiteren können die Bauteile des Roboters und/oder Systems auf mehrere physikalische Produkte verteilt realisiert sein um ein verteiltes System zu bilden.

## Patentansprüche

1. Mobiler autonomer kollaborativer Assistenzroboter (100) zum Bewegen und/oder Manipulieren von Objekten, insbesondere Proben, insbesondere flüssigen Proben und/oder Reagenzien und/oder Geräten, in einem medizinischen Betriebsbereich, insbesondere in einem in-vitro-diagnostischen Labor zur Analyse der Proben, umfassend:
- Eine Navigationseinheit (101) zur autonomen oder teil-autonomen kollisionsfreien Navigation in dem Betriebsbereich;
- Eine lokalen Prozessoreinheit (102) zur Daten- und Signalverarbeitung;
- Eine Kommunikationseinheit (103) zur Interkation mit externen Geräten über drahtlose Schnittstellen;
- Ein autonomes Antriebssystem (104), insbesondere einem elektrischen Antriebssystem;
- Eine Energieversorgungseinrichtung (105);
- Einen Korpus (106), an dem eine drehbar gelagerte lineare Hubachse (H) befestigt ist, wobei an einem Schlitten (S) der Hubachse (H) zumindest ein Greifarm (G) starr befestigt ist, so dass der Greifarm (G) einen zylindrischen Arbeitsbereich bedienen kann;
- Eine Sensoreinheit (107), insbesondere umfassend eine Menge von optischen Sensoren zur Umgebungserkennung und
- Eine Identifikationseinrichtung (108), die zur eineindeutigen Identifikation der zu bewegenden Objekte und insbesondere zur Identifikation des Inhalts dieser Objekte bestimmt ist.

2. Assistenzroboter nach Anspruch 1, bei dem die Identifikationseinrichtung (108) zur Identifikation der zu manipulierenden Objekte und/oder Geräte und/oder relevanter Interaktions- bzw. Greifpunkte bestimmt ist.

3. Assistenzroboter nach einem der vorangehenden Ansprüche, der einen Ablagebereich (109) umfasst, in dem zumindest ein zu transportierendes Objekt abgelegt werden kann.

4. Assistenzroboter nach dem unmittelbar vorangehenden Anspruch, wobei der Ablagebereich (109) temperaturgeführt sein kann und insbesondere als Kühlbox oder Wärmebox ausgebildet ist, wobei optional eine Temperaturüberwachungseinheit zur Temperaturüberwachung ausgebildet ist.

5. Assistenzroboter nach einem der vorangehenden Ansprüche, bei dem der zumindest eine Greifarm (G) ein hinteres Armsegment (G1) umfasst, über das er an der Hubachse (H) befestigt ist und ein mit dem hinteren Armsegment (G1) gelenkig verbundenes vorderes Armsegment (G2) umfasst, an dem ein Endeffektor (G3) insbesondere mit drei Freiheitsgraden befestigt ist.

6. Assistenzroboter nach dem unmittelbar vorangehenden Anspruch, bei dem der Endeffektor (G3) über einen Adapter (G4) an dem vorderen Armsegment (G2) befestigt ist, der einen flexiblen Austausch von unterschiedlichen Endeffektoren (G3) für unterschiedliche Aufgaben ermöglicht.

7. Assistenzroboter nach einem der vorangehenden Ansprüche, bei dem eine oder mehrere Schwenkachsen des zumindest einen Greifarms (G) im Wesentlichen vertikal angeordnet ist/sind, so dass der Greifarm (G) und insbesondere dessen Armsegmente (G1, G2) senkrecht zur Hubachse (H) beweglich sind.

8. Assistenzroboter nach einem der vorangehenden Ansprüche, bei dem der zumindest eine Greifarm (G) als Teleskoparm ausgebildet ist.

9. Assistenzroboter nach einem der vorangehenden Ansprüche, bei dem der zumindest eine Greifarm (G) mit Greifinstruktionen zum Greifen der Objekte und/oder mit Bedieninstruktionen zum Manipulieren, insbesondere zum Öffnen und/oder Verschließen von externen Geräten (A) und/oder internen Bauteilen angesteuert wird.

10. Assistenzroboter nach einem der vorangehenden Ansprüche, bei dem der zumindest eine Greifarm (G) in einer Transportposition positioniert wird, die nicht über eine Außenkontur des Assistenzroboters (100) herausragt, wenn sich der Assistenzroboter (100) bewegt und/oder bei dem der zumindest eine Greifarm (G) auf koordinierte Weise mit der Fahrbewegung des Assistenzroboters (100) angesteuert werden kann, um eine Manipulationsaufgabe zu erfüllen.

11. Assistenzroboter nach einem der vorangehenden Ansprüche, bei dem die Sensoreinheit (107) zumindest teilweise in einem festen Abstand an der Hubachse (H), insbesondere an dessen einem oberen Ende, befestigt ist.

12. Assistenzroboter nach einem der vorangehenden Ansprüche, bei dem die Sensoreinheit (107) einen MEMS-Baustein umfasst und/oder eine optische Sensoreinheit, eine Beschleunigungssensoreinheit, eine LIDAR-, Radar und/oder Sonar-Sensoreinheit, eine Gyroskopeinheit, eine Kraft- und/oder Momentensensoreinheit, eine akustische Sensoreinheit, eine Temperaturmesseinheit und/oder eine Sensoreinheit zur Erfassung von Umgebungsbedingungen, insbesondere von Feuchtigkeit und/oder Temperatur umfasst.

13. Assistenzroboter nach einem der vorangehenden Ansprüche, der einen Zeitgeber umfasst, um alle ausgeführten Aktionen in einer digitaler Repräsentation mit einem Zeitstempel zu speichern.

14. Assistenzroboter nach einem der vorangehenden Ansprüche, bei dem die Navigationseinheit (101) einen globalen und/oder lokalen Trajektorienplanungsalgorithmus implementiert.

15. Assistenzroboter nach einem der vorangehenden Ansprüche, der mit einem User Interface (UI) ausgebildet ist, das zur Anzeige der aktuell transportierten und/oder gelagerten Objekte und/oder von Metainformationen bestimmt ist, umfassend eine Zeitdauer, eine Identifikation des jeweiligen Objektes und/oder einer Repräsentation der anstehenden Aufgaben.

16. Assistenzroboter nach einem der vorangehenden Ansprüche, an dessen Korpus (106) zumindest ein Hilfsaggregat (110) befestigt ist, das angeordnet und ausgelegt ist, um mit dem zumindest einem Greifarm (G) und insbesondere dessen Endeffektor (G3) zusammenzuwirken.

17. System zum Bewegen und/oder Manipulieren von Objekten, insbesondere Proben, insbesondere flüssigen Proben und/oder Reagenzien und/oder Geräten, in einem medizinischen Arbeitsbereich, insbesondere in einem in-vitro-diagnostischen Labor zur Analyse der Proben mit einer Vielzahl von mobilen autonomen kollaborativen Assistenzrobotern (100) nach einem der vorangehenden Ansprüche, die untereinander in Datenaustausch stehen und für eine gemeinsame Aufgabe kooperieren können und die lokal und/oder von einem übergeordneten Flottensteuerungsprogramm gesteuert werden.

18. Verfahren zum automatisierten Bewegen und/oder Manipulieren von Objekten, insbesondere Proben, insbesondere flüssigen Proben und/oder Reagenzien und/oder Geräten, in einem medizinischen Arbeitsbereich, insbesondere in einem in-vitro-diagnostischen Labor zur Analyse der Proben mit zumindest einem mobilen autonomen kollaborativen Assistenzroboter (100) nach einem der vorangehenden Patentansprüche, umfassend folgende Verfahrensschritte:
- Einlesen (S1) einer digitalen Aufgabe aus einer digitalen Repräsentation einer Aufgabenliste;
- Lokale und/oder globale Trajektorienplanung (S2) zur Abarbeitung der Aufgabe;
- Berechnen (S31) von Steueranweisungen und/oder Erfassen (S32) von Steueranweisungen über die Kommunikationseinheit zur Abarbeitung der Aufgabe;
- Erfassen (S4) von Sensorsignalen bei der Abarbeitung der Aufgabe und
- Kommunikation (S5) der erfassten Sensorsignale an eine interne und/oder externe Prozessoreinheit.
